# FASCICULE DE BREVET EUROPEEN

(11) **EP 1 547 426 B1**
(45) Date de publication et mention de la délivrance du brevet: **18.11.2009**
(21) Numéro de dépôt: 03772386.3
(22) Date de dépôt: 26.09.2003
(51) Int. Cl.: H04L 29/06

(54) **IDENTIFICATION D UN TERMINAL AUPRES D UN SERVEUR**
IDENTIFIKATION EINES ENDGERÄTS MIT EINEM SERVER
IDENTIFICATION OF A TERMINAL WITH A SERVER

(30) Priorité: 26.09.2002 FR 0211944
(43) Date de publication de la demande: 29.06.2005
(73) Titulaire: Gemalto SA, 92190 Meudon (FR)
(72) Inventeur: DE GROOT, Max, F-13720 La Bouilladisse (FR)
(86) Numéro de dépôt international: PCT/FR2003/002837
(87) Numéro de publication internationale: WO 2004/030394

(56) Documents cités:
- EP-A- 0 982 958
- WO-A-00/52949
- US-A- 6 144 949

## Description

La présente invention concerne l'identification d'un terminal d'usager, et plus particulièrement d'un objet électronique portable personnel à un usager, tel qu'une carte à puce, ou bien d'un usager du terminal auprès d'un serveur. L'identification sert à accéder par l'intermédiaire d'un réseau de télécommunications à un service dispensé par le moyen serveur, tel que l'établissement d'une communication avec un autre terminal d'usager.

Il est connu qu'un usager possédant un terminal radiotéléphonique doit s'identifier auprès d'un serveur dans un réseau de télécommunications quelconque afin d'accéder à un service. Pour cela, un identificateur identifiant le terminal ou l'usager est transmis au moins une fois en clair depuis le terminal au serveur. Puis dans les messages échangés entre le terminal et le serveur, l'identificateur est également présent. Ceci permet à l'administrateur du serveur de gérer le service proposé en fonction des données liées à l'abonnement de l'usager et de gérer la facturation du service.

Dans un tel système terminal-client/serveur, un attaquant peut détecter l'identificateur du terminal ou de l'usager dans les messages transmis par le terminal afin de localiser celui-ci et par exemple d'intercepter et d'horodater les messages transmis depuis le terminal au serveur.

Dans un réseau de radiotéléphonie cellulaire du type GSM, chaque terminal mobile est identifié par un identificateur international unique IMSI (International Mobile Subscriber Identity). Pour des raisons de sécurité, l'identificateur TMST est transmis à travers l'interface radio entre le terminal mobile de l'usager et le réseau fixe du réseau de radiotéléphonie que très rarement, par exemple après une mise sous tension du terminal ou après une perte de couverture radioélectrique du terminal. Afin de ménager la confidentialité de l'identificateur de l'usager IMSI, un identificateur temporaire TMSI (Temporary Mobile Subscriber Identity) remplace l'identificateur IMSI chaque fois que le terminal mobile doit s'identifier auprès du réseau fixe du réseau de radiotéléphonie. L'identificateur temporaire TMSI est transmis par l'enregistreur de localisation des visiteurs (VLR) auquel est rattaché momentanément le terminal mobile à chaque mise sous tension du terminal mobile, ou le cas échéant lors d'un changement d'enregistreur VLR pour un transfert du terminal entre des zones de localisation.

Toutefois, comme divulgué par le document EP A-0 9B2 958, du 1 mars 2000, lors de certains échanges entre le terminal mobile et l'enregistreur VLR, après une première mise sous tension du terminal, l'identificateur unique IMSI peut être intercepté. Toutefois, la transmission ultérieure de l'identificateur temporaire TMSI ne remédie pas à la substitution de l'identificateur IMSI à l'usager par un attaquant fraudeur.

En outre, le changement de l'identificateur temporaire est décidé par le réseau fixe du réseau de radiotéléphonie, et d'une manière générale par le moyen serveur dans le réseau fixe contenant l'enregistreur VLR, ce qui interdit toute maîtrise de la gestion de son identificateur personnel par l'usager au niveau du terminal mobile.

L'objectif de l'invention est de pallier ces inconvénients afin de ne pas transmettre l'identificateur personnel du terminal ou de l'usager en clair au serveur pendant une session entre le terminal et le serveur, y compris lors de l'établissement de celle-ci, et plus généralement chaque fois que l'identificateur devait être transmis selon la technique antérieure, tout en permettant une identification du terminal ou de l'usager auprès du serveur, ainsi qu'une gestion d'un identificateur réellement transmis au niveau du terminal.

A cette fin, l'invention propose un procédé conforme à la revendication 1.

Lorsqu'au moins une authentification du moyen terminal par le moyen serveur, ou une authentification mutuelle de ceux-ci, est prévue, les étapes énoncées ci-dessus du procédé de l'invention précédent l'authentification.

Grâce à la détermination d'un deuxième identificateur et à la transmission de celui-ci au moyen serveur, le premier identificateur personnel à l'usager du moyen terminal n'est jamais transmis par le moyen terminal au moyen serveur. Par conséquent, le premier identificateur peut être tout ou partie de l'identificateur d'usager IMSI pour un terminal mobile dans un réseau de radiotéléphonie cellulaire du type GSM demeure protégé dans le moyen terminal. Le deuxième identificateur peut être transmis par le, moyen terminal dès le début d'une communication, c'est-à-dire lors de l'établissement d'un appel ou lors de l'établissement d'une session, au moyen serveur afin que le serveur décrypte le deuxième identificateur en le premier identificateur de l'usager et ainsi identifie l'usager.

Tout changement du deuxième identificateur est produit par une génération d'un autre nombre aléatoire dans le moyen terminal. Le moyen terminal gère ainsi localement les changements du deuxième identificateur, indépendamment du moyen serveur, en fonction d'événements particuliers, ou périodiquement, ou bien encore manuellement à la demande de l'usager.

Afin d'augmenter encore la sécurité du premier identificateur de l'usager, la clé publique nécessaire à l'exécution de l'algorithme asymétrique dans le moyen terminal afin de produire le deuxième identificateur à transmettre, peut être modifiée au gré du moyen serveur, de préférence après une authentification préalable du moyen serveur par le moyen terminal. Dans ce cas, le procédé d'identification selon l'invention peut comprendre un changement de clé publique et de clé privée pour l'algorithme asymétrique dans le moyen serveur et un téléchargement de la clé publique changée depuis le moyen serveur dans le moyen terminal.

L'invention concerne également un système conforme à la revendication 8. Par exemple, le moyen pour générer un nombre aléatoire et le moyen pour déterminer un deuxième identificateur sont inclus dans un objet électronique portable du type carte à puce.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un réseau de radiotéléphonie cellulaire numérique selon un premier exemple pour la mise en oeuvre du procédé de l'invention, dans lequel le moyen terminal est constitué essentiellement par un module d'identité du type carte SIM ;
- la figure 2 montre des étapes du procédé d'identification selon une première réalisation de l'invention qui fait appel à un algorithme asymétrique et un algorithme symétrique ;
- la figure 3 montre des étapes du procédé d'identification selon une deuxième réalisation de l'invention qui fait appel seulement à un algorithme asymétrique ; et
- la figure 4 est un bloc-diagramme schématique d'un réseau de télécommunications entre un terminal du type ordinateur personnel et un serveur selon un deuxième exemple pour la mise en oeuvre du procédé selon l'invention.

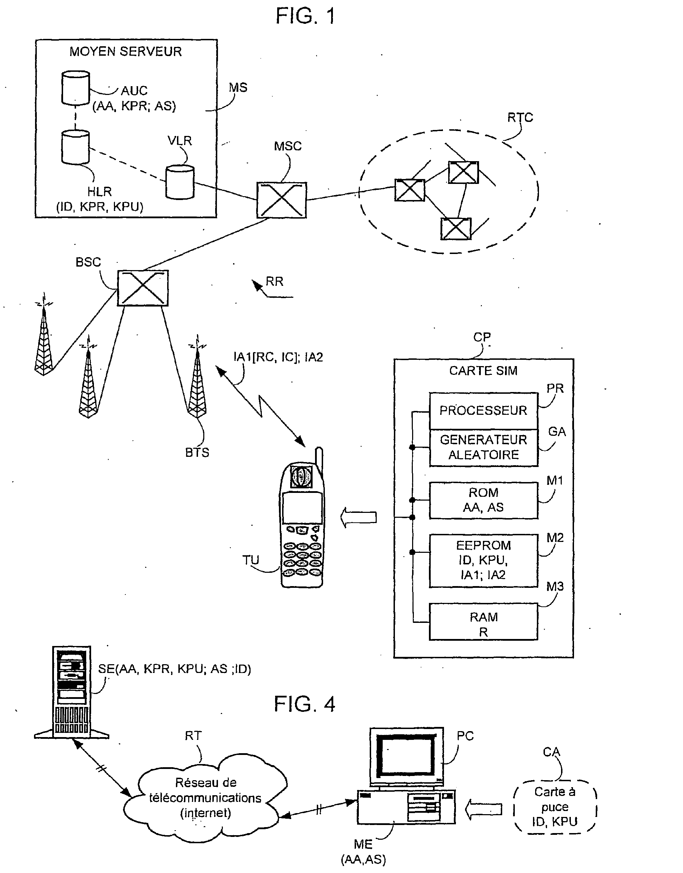

Selon un premier exemple d'architecture client/serveur de l'invention montré à la figure 1, le moyen terminal d'usager est constitué par un terminal radiotéléphonique mobile d'usager TU, et plus particulièrement par un module amovible, appelé carte SIM (Subscriber Identity Module), du type carte à puce CP, dite également carte à microcontrôleur, inclus dans le terminal TU.

Le terminal radiotéléphonique d'usager TU est situé à un instant donné dans une zone de localisation d'un réseau de radiotéléphonie cellulaire numérique RR, par exemple de type GSM ou UMTS. La zone de localisation est schématisée dans la figure 1 par la partie fixe du réseau RR comprenant un commutateur du service mobile MSC qui est relié d'une part à travers un contrôleur de station de base BSC à une station de base BTS connectée par voie radio au terminal radiotéléphonique TU, d'autre part à un commutateur téléphonique à autonomie d'acheminement du réseau téléphonique commuté RTC.

Le moyen serveur MS selon un premier exemple d'architecture client/serveur de l'invention regroupe globalement des entités de la partie fixe du réseau de radiotéléphonie RR servant à la gestion de l'itinérance des terminaux mobiles, de la sécurité des communications avec les terminaux mobiles et des appels entrants et sortants avec les terminaux mobiles dans le réseau RR. Ces entités dans le moyen serveur MS sont principalement un enregistreur de localisation des visiteurs VLR relié au moins au commutateur MSC et contenant des caractéristiques, telles qu'identités et profils d'abonnement des terminaux mobiles, et plus précisément des usagers possédant les cartes à puce CP dans ceux-ci, situés dans la zone de localisation, et un enregistreur de localisation nominal HLR relié à plusieurs commutateurs du service mobile MSC à travers le réseau de signalisation du réseau de radiotéléphonie RR.

Comme on le verra dans la suite, l'enregistreur VLR n'attribue plus une identité temporaire TMSI pour identifier chaque terminal mobile TU dans la zone de localisation, mais est transparent à un identificateur anonyme respectif, comme un pseudonyme IA1., IA2, transmis par chaque terminal d'usager TU pour s'identifier auprès du moyen serveur MS, selon l'invention. Les communications pour les terminaux radiotéléphoniques mobiles visiteurs, tel que le terminal TU montré à la figure 1, se trouvant momentanément dans la zone de localisation desservie par le commutateur MSC sont gérées par celui-ci.

L'enregistreur de localisation nominal HLR est essentiellement une base de données, comme l'enregistreur VLR, qui contient pour chaque terminal mobile TU et plus précisément pour chaque carte SIM CP, un unique identificateur d'usager ID attribué lors de l'abonnement de l'usager au service de radiotéléphonie, en écrivant l'identificateur ID en mémoire non volatile EEPROM de la carte CP. L'identificateur ID identifie également la carte à puce CP et peut être au moins en partie identique à l'identité internationale IMSI notamment pour un réseau de radiotéléphonie du type GSM. L'enregistreur HLR enregistre d'autres caractéristiques liées aux usagers, telles que leurs numéros téléphoniques d'annuaire, leurs profils d'abonnement, etc.

Comme il est connu, l'enregistreur de localisation nominal HLR coopère avec un centre d'authentification AUC bien souvent sur la même plate-forme que l'enregistreur HLR. Le centre d'authentification assure l'authentification des usagers et participe à la confidentialité des données transitant dans les interfaces radio entre les terminaux mobiles TU et les stations de base BTS en gérant des algorithmes d'authentification et de détermination de clé. Le centre d'authentification génère ainsi des clés secrètes d'authentification et des clés de chiffrement respectivement attribuées aux usagers. En particulier, selon l'invention, le centre d'authentification AUC gère un algorithme asymétrique AA dont la clé privée KPR est mémorisée dans le centre AUC et l'enregistreur HLR, et un algorithme symétrique AS dont la clé dépend d'un nombre aléatoire R selon une première réalisation de l'invention, ou gère seulement un algorithme asymétrique AA à clé privée KPR. Par exemple, l'algorithme asymétrique à clé publique AA peut être l'algorithme de El Gamal, ou de Cramer-Shoup, ou RSA-OAEP (Rivest, Shamir et Adleman-Optimal Asymetric encryption Padding). En variante, la clé privée KPR n'est pas commune à tous les usagers du réseau RR, mais plusieurs clés privées KPR sont respectivement attribuées à des groupes d'usager en correspondance avec des groupes d'identificateurs d'usager ID, ces correspondances étant enregistrées dans l'enregistreur HLR.

Comme il est connu, la carte à microcontrôleur SIM CP comprend principalement un microprocesseur PR et trois mémoires M1, M2 et M3.

Selon l'invention, un générateur de nombres aléatoires GA est implémenté matériellement dans ou en liaison avec le processeur PR de la carte à puce. Le générateur GA génère un nombre aléatoire R participant à l'identification anonyme de la carte à puce CP en réponse à une requête de la mémoire M1. En variante, le générateur de nombres aléatoires est inclus sous forme de logiciel dans la mémoire ROM M1.

La mémoire M1 est du type ROM et inclut le système d'exploitation de la carte et bien souvent une machine virtuelle sur lequel s'appuie le système d'exploitation. Des algorithmes d'authentification, de communication et d'application, et particulièrement des algorithmes AA et AS, ou AS selon l'invention sont implémentés dans la mémoire M1. La mémoire M2 est une mémoire non volatile de type EEPROM contenant des caractéristiques liées à l'usager telles que l'identificateur ID de l'usager possédant la carte CP, le profil d'abonnement, un répertoire de numéros téléphoniques, un code confidentiel, etc. La mémoire M2 contient également une clé publique KPU pour l'algorithme asymétrique AA implémenté dans la mémoire M1, associée à la clé privée KPR par l'enregistreur HLR dans le moyen serveur MS, et en variante également en correspondance avec les identificateurs ID des usagers d'un groupe respectif. La mémoire M3 est une mémoire RAM servant au traitement des données à échanger entre le processeur PR et le microcontrôleur inclus dans le terminal mobile TU.

Les deux réalisations du procédé d'identification d'un moyen terminal d'usager TU, CP par un moyen serveur MS selon l'invention sont décrites ci-après en référence au premier exemple montré à la figure 1.

Le procédé d'identification selon l'invention intervient au début E0 d'une session à établir entre le moyen terminal constitué par au moins la carte à puce SIM CP et le moyen serveur MS à travers le réseau de radiotéléphonie RR, par exemple après la mise sous tension du terminal TU ou lors de tout établissement d'appel sortant dans le terminal TU. Plus généralement, le procédé de l'invention peut intervenir chaque fois que la carte à puce doit transmettre, selon la technique antérieure, son identificateur au réseau fixe. Ainsi le procédé de l'invention peut précéder une authentification au moins de la carte à puce CP par l'enregistreur HLR et le centre d'authentification AUC.

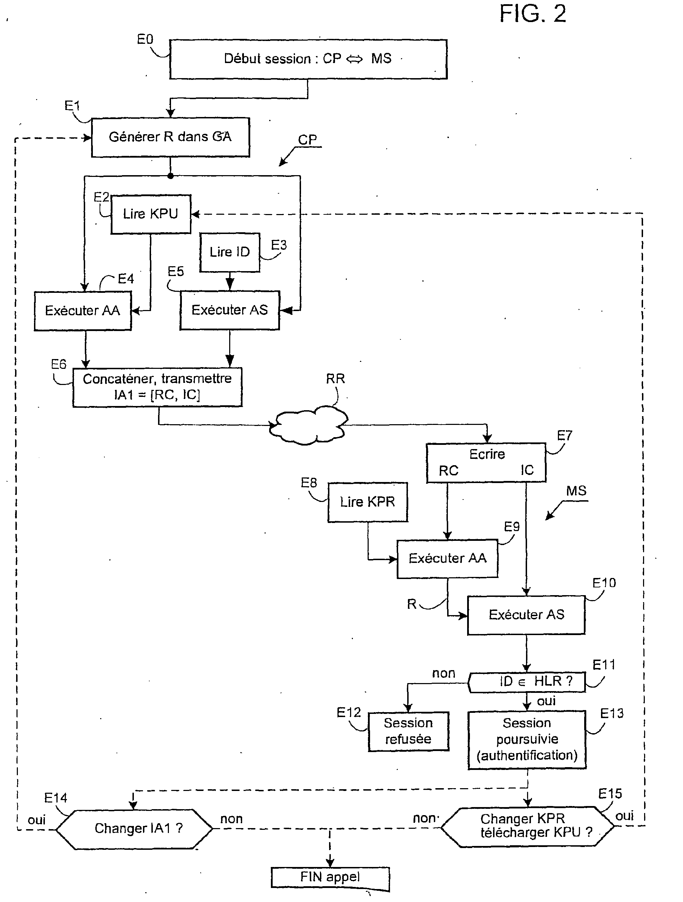

Selon la première réalisation du procédé d'authentification montré à la figure 2, des étapes E1 à E6 succédant à l'étape initiale E0 pour déterminer un identificateur anonyme IA1 sont essentiellement exécutées dans la carte à puce CP, et des étapes E6 à E15 pour récupérer l'identificateur d'usager ID sont exécutées dans le moyen serveur MS du réseau de radiotéléphonie RR.

A l'étape E1, le générateur de nombres aléatoires GA dans la carte à puce CP fournit un nombre aléatoire R qui est mémorisé dans la mémoire M3 pour être appliqué à l'algorithme asymétrique AA et en tant que clé à l'algorithme symétrique AS, implémentés dans la mémoire M1.

La clé publique KPU et l'identificateur d'usager ID sont lus dans la mémoire M2 à des étapes quasi-simultanées E2 et E3 pour être appliqués respectivement aux algorithmes AA et AS. L'application du nombre aléatoire généré R en tant que données à l'algorithme asymétrique AA avec la clé publique KPU produit un nombre aléatoire crypté RC à l'étape E4. En parallèle avec l'étape précédente E4, l'application du nombre aléatoire généré R, en tant que clé secrète unique, et de l'identificateur ID de l'usager, en tant que données, à l'algorithme symétrique AS produit un identificateur crypté IC à l'étape E5. En pratique, une partie de l'identificateur ID est appliquée à l'algorithme AS. Cette partie ne comprend que le numéro confidentiel MSIN (Mobile Subscriber Identification Number) de l'usager inclus dans l'identificateur IMSI de l'usager et identifiant l'usager dans le réseau RR.

Puis après l'exécution des algorithmes AA et AS, le processeur PR concatène le nombre aléatoire crypté RC et l'identificateur crypté IC en un identificateur anonyme IA1 qui est écrit dans la mémoire M2. L'identificateur IA1 constitue un pseudonyme de l'usager, c'est-à-dire de la carte SIM CP en tant que client du moyen serveur MS. Cette concaténation est suivie d'une transmission du pseudonyme IA1 dans un message à travers le terminal TU et le réseau de radiotéléphonie RR vers le moyen serveur MS à l'étape E6. Le pseudonyme IA1 peut être transmis avec les préfixes MCC (Mobile Country Code) et MNC (Mobile Network Code) de l'identificateur IMSI de l'usager afin que l'enregistreur HLR reconnaisse l'indicatif du pays de l'usager et l'indicatif du réseau RR.

Dans le moyen serveur MS, l'enregistreur VLR retransmet l'identificateur anonyme IA1 à l'enregistreur HLR qui, en coopération avec le centre d'authentification AUC, exécute les étapes suivantes E7 à E13.

Après une écriture du nombre aléatoire RC et de l'identificateur IC composant l'identificateur anonyme reçu IA1 dans l'enregistreur HLR à l'étape E7, le centre d'authentification AUC lit la clé privée KPR à l'étape E8 afin de l'appliquer avec le nombre aléatoire crypté reçu RC à l'algorithme asymétrique AA à l'étape E9. Le centre d'authentification AUC récupère ainsi le nombre aléatoire généré R constituant le résultat de l'exécution de l'algorithme AA et l'applique en tant que clé à l'algorithme symétrique AS qui reçoit en tant que données l'identificateur crypté reçu IC lu dans l'enregistreur HLR à l'étape E10.

L'identificateur d'usager ID initialement appliqué à l'étape E5 dans la carte CP est alors récupéré en sortie de l'algorithme symétrique AS par l'enregistreur HLR pour que celui-ci vérifie s'il est écrit dans sa base de données à l'étape E11. Si l'identificateur récupéré ID n'est pas reconnu, la session demandée, en l'occurrence un appel, est refusée à l'étape E12. Dans le cas contraire, l'enregistreur HLR poursuit la session à l'étape E13 en le signalant à l'enregistreur VLR qui commande l'authentification de la carte à puce CP par le couple HLR-AUC ou une authentification mutuelle de ces derniers.

Après l'étape E13, la carte à puce CP transmet automatiquement le pseudonyme IA1 lu dans la mémoire M2 au moyen serveur MS chaque fois que la carte à puce doit s'identifier à celui-ci. Cependant, à tout moment, comme indiqué à une étape E14, la carte à puce CP peut décider de changer de pseudonyme IA1 en sollicitant à nouveau le générateur de nombres aléatoires GA afin qu'il génère un autre nombre aléatoire R, à l'étape E1. La génération d'un autre nombre aléatoire R par le générateur GA à l'étape E1 et donc l'exécution d'un nouveau cycle d'étapes E1 à E14 peuvent être périodiques dans le moyen terminal afin de périodiquement identifier la carte à puce CP par le moyen serveur MS en déterminant un autre identificateur anonyme IA1. Selon une autre variante, la génération d'un autre nombre aléatoire R par le générateur GA à l'étape E1 et donc l'exécution d'un cycle d'étapes E1 à E14 peuvent intervenir sous le contrôle ou non de l'usager, à la suite par exemple au moins de l'un des événements suivants dans le moyen terminal constitué par le terminal TU et la carte à puce CP : mise sous tension du terminal TU, précédant au moins une authentification de la carte à puce CP par le couple HLR-AUC et une identification d'un usager du terminal TU par composition d'un code secret PIN sur le clavier du terminal, établissement d'un appel, établissement d'une session entre le moyen terminal et le moyen serveur, substitution du moyen serveur MS à un autre moyen serveur par exemple lors d'un transfert depuis l'enregistreur VLR vers un autre enregistreur VLR du réseau RR auquel est rattaché maintenant le terminal TU, activation d'une application de service telle que l'envoi d'un message court ou d'une connexion à un portail WAP (Wireless Application Protocol) pour terminaux mobiles pour communiquer avec un serveur de site web.

Afin d'améliorer la sécurité de l'identification, l'enregistreur HLR, ou plus généralement le moyen serveur MS, peut décider à tout instant de changer la clé privée actuelle KPR en une autre clé privée et en conséquence la clé publique actuelle KPU en une autre clé publique comme indiqué à une étape E15. Dans ce cas, de préférence après une authentification de l'enregistreur VLR par la carte CP, l'enregistreur HLR commande le téléchargement de l'autre clé publique KPU à travers l'enregistreur VLR, le réseau de radiotéléphonie RR et le terminal TU, dans la mémoire M2 de la carte à puce CP afin que ladite autre clé publique KPU soit utilisée pour les prochaines exécutions de l'algorithme asymétrique AA à l'étape E4. L'autre clé publique KPU est transmise dans un message sécurisé par l'enregistreur VLR au moyen de l'exécution d'un algorithme par exemple symétrique dont la clé secrète a été initialement enregistrée dans la mémoire M2 de la carte à puce CP afin d'authentifier ladite autre clé publique KPU dans le processeur PR.

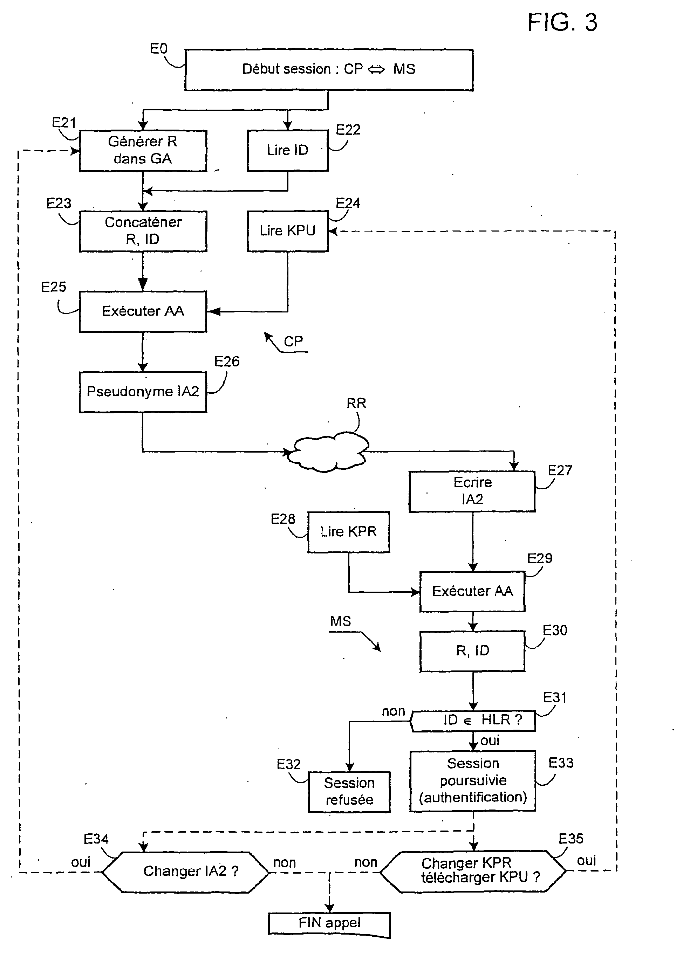

Selon une deuxième réalisation montrée à la figure 3, au début E0 d'une session à établir entre la carte à puce CP dans le terminal TU et le moyen serveur MS, comme décrit précédemment, le procédé comprend d'abord des étapes E21 à E26 essentiellement exécutées dans la carte SIM CP, puis des étapes E27 à E33 dans le moyen serveur MS. Pour cette deuxième réalisation, la mémoire ROM M1 et le centre d'authentification AUC ne comprennent qu'un algorithme asymétrique à clé publique AA.

A la suite de l'étape E0, le générateur de nombres aléatoires GA génère un nombre aléatoire R qui est écrit dans la mémoire M3 à l'étape E21. L'identificateur ID de la carte à puce CP est lu dans la mémoire M2 à l'étape E22 afin que le processeur PR concatène le nombre aléatoire généré R et au moins une partie de l'identificateur lu ID à l'étape E23. La clé publique KPU est lue dans la mémoire M2 à l'étape E24 pour être appliquée avec la combinaison produite [R, ID], en tant que données, à l'algorithme asymétrique AA à l'étape E25. L'algorithme asymétrique AA est alors exécuté à l'étape E25 et produit un identificateur anonyme IA2 qui est écrit dans la mémoire M2 et qui constitue un pseudonyme, c'est-à-dire de la carte SIM CP que possède l'usager, à l'étape E26. L'identificateur anonyme IA2 représentatif de l'identificateur ID crypté est transmis dans un message par la carte à puce CP à travers le terminal TU et le réseau de radiotéléphonie RR vers le moyen serveur MS.

L'enregistreur de localisation des visiteurs VLR retransmet l'identificateur anonyme IA2 à l'enregistreur HLR qui l'écrit en mémoire à l'étape E27. A l'étape E28, la clé privée KPR est lue dans l'enregistreur HLR qui exécute les étapes suivantes E29 à E33 en coopération avec le centre d'authentification AUC. La clé lue KPR et l'identificateur IA2, en tant que données, sont appliqués à l'algorithme, asymétrique AA dans le centre d'authentification AUC, à l'étape E29. L'exécution de l'algorithme AA permet de récupérer le nombre aléatoire R et surtout l'identificateur d'usager ID à l'étape E30.

L'étape E30 est suivie d'étapes E31 à E35 qui sont respectivement analogues aux étapes E11 à E15 et qui concernent la vérification de l'appartenance de l'identificateur récupéré ID à la base de données dans l'enregistreur HLR, la transmission automatique de l'identificateur anonyme IA2 par la carte à puce CP chaque fois que celle-ci doit s'identifier auprès du moyen serveur MS, le changement de préférence automatique d'identificateur anonyme IA2 soit périodiquement soit à la suite de l'un au moins des événements énoncés précédemment, et le téléchargement d'une autre clé publique KPU dans la carte à puce CP à la suite d'un changement de clé privée KPR dans le moyen serveur MS.

Selon une variante des réalisations décrites ci-dessus, l'enregistreur de localisation des visiteurs VLR dans le réseau RR contient les algorithmes AA et AS, qui sont exécutés aux étapes E9 et E10, ou l'algorithme AS qui est exécuté à l'étape E29, au lieu d'être implémentés et exécutés dans le centre d'authentification.

Selon un deuxième exemple d'architecture client/serveur selon l'invention montré à la figure 4, le moyen terminal est un ordinateur personnel PC ou un assistant numérique personnel (PDA) ou tout autre objet électronique notamment portable qui est relié à un réseau de télécommunications RT. Le réseau RT peut inclure le réseau internet et un réseau d'accès tel que le réseau téléphonique commuté, ou bien constituer un réseau local, par exemple un réseau local sans fil WLAN (Wireless Local Area Network). Le terminal PC comprend notamment en relation avec l'invention, une mémoire ME de préférence sécurisée dans laquelle sont implémentés les algorithmes AA et AS, ou l'algorithme AA, et sont mémorisés l'identificateur d'usager ID et la clé publique KPU. Le terminal PC contient un navigateur jouant le rôle de client par rapport à un serveur SE, en tant que moyen serveur selon l'invention, relié au réseau de télécommunications RT. Dans le serveur SE sont également implémentés les algorithmes AA et AS selon la première réalisation, ou l'algorithme AA selon la deuxième réalisation, et sont mémorisées la clé privée KPR et la clé publique KPU de préférence en correspondance avec un identificateur ID d'un usager du terminal PC, tel que log-in, comme dans le moyen serveur MS selon le premier exemple. Dans cet exemple, le serveur SE est par exemple un site ou un portail web qui gère au moins l'accès à une base de données à laquelle l'usager du terminal PC est abonné.

Des étapes analogues à celles décrites E1 à E15, ou E21 à E35 sont exécutées pour partie dans le terminal PC et pour partie dans le serveur SE afin d'identifier un usager du terminal TU par comparaison de l'identificateur récupéré ID par le serveur SE et l'identificateur d'usager mémorisé dans le serveur. Ces étapes peuvent précéder d'autres étapes de sécurisation relatives notamment à une authentification de l'usager par vérification d'un mot de passe de l'usager.

En variante, le terminal PC est doté d'un lecteur pour carte à puce additionnelle CA qui est analogue à la carte à puce CP selon le premier exemple montré à la figure 1, c'est-à-dire dont les mémoires M1 et M2 contiennent des algorithmes AA et AS selon la première réalisation, ou l'algorithme AA selon la deuxième réalisation, l'identificateur ID de l'usager possesseur de la carte CA et donc de la carte CA elle-même et la clé publique KPU. Comme dans l'exemple montré à la figure 1, le terminal PC dans cette variante est transparent aux communications entre le serveur SE et la carte CA en ce qui concerne l'identification de la carte CA par le serveur SE selon l'invention. La liaison entre la carte CA et le terminal PC est classique et peut être une liaison à contact électrique, une liaison dite sans contact, ou une liaison radioélectrique de proximité du type Bluetooth ou 802.11.

Selon encore une autre variante du deuxième exemple montré à la figure 4, la carte à puce CA a seulement prémémorisé l'identificateur ID et la clé publique KPU dans sa mémoire EEPROM M2, et les algorithmes AA et AS, ou l'algorithme AA, sont implémentés dans le terminal PC.

Dans ces variantes du deuxième exemple, le terminal PC et la carte à puce additionnelle CA peuvent être respectivement un terminal bancaire et une carte de crédit, ou un terminal point de vente et un porte-monnaie électronique.

## Revendications

1. Procédé pour identifier un moyen terminal d'usager (TU, CP ; PC, CA) ou un usager du moyen terminal par un moyen serveur (MS ; SE) à travers un réseau de télécommunications (RR ; RT), à l'aide d'un premier identificateur (ID), un algorithme asymétrique (AA) à clé publique (KPU) étant implémenté dans le moyen terminal, ledit procédé comportant:
- une génération (E1, E21) d'un nombre aléatoire (R) dans le moyen terminal d'usager (TU, CP ; PC, CA),
- une détermination (E4, E5 ; E25) dans le moyen terminal d'un deuxième identificateur (IA1 ; IA2) en fonction du nombre aléatoire (R), au moins d'une partie du premier identificateur (ID) et du résultat de l'exécution de l'algorithme asymétrique (AA) auquel au moins le nombre aléatoire est appliqué,
- une transmission (E6 ; E26) du deuxième identificateur (IA1 ; IA2) au moyen serveur (MS ; SE), et
- dans le moyen serveur, une récupération (E9, E10 ; E29) du premier identificateur (ID) au moins par exécution de l'algorithme asymétrique (AA) auquel une clé privée (KPR) et au moins partiellement le deuxième identificateur (IA1 ; IA2) sont appliqués, afin que le moyen serveur vérifie que le premier identificateur récupéré (ID) soit écrit dans une mémoire (HLR) du moyen serveur,
ledit procédé étant **caractérisé en ce que** la détermination et la transmission du deuxième identificateur (IA1 ; IA2) ainsi que la récupération du premier identificateur sont adaptées pour que les valeurs du premier identificateur et du nombre aléatoire (R) soient conservées strictement confidentielles par le moyen terminal d'usager (TU, CP ; PC, CA) et par le moyen serveur.

2. Procédé conforme à la revendication 1, dans lequel les étapes énoncées dans la revendication 1 précèdent au moins une authentification (E13) du moyen terminal (TU, CP ; PC, CA) par le moyen serveur (MS ; SE).

3. Procédé conforme à la revendication 1 ou 2, dans lequel la détermination dans le moyen terminal (TU, CP ; PC, CA) comprend une application (E4) du nombre aléatoire généré (R) à l'algorithme asymétrique (AA) avec la clé publique (KPU) pour produire un nombre aléatoire crypté (RC), une application (E5) du nombre aléatoire généré (R) en tant que clé et du premier identificateur (ID) à un algorithme symétrique (AS) implémenté dans le moyen terminal pour produire un identificateur crypté (IC), et une concaténation (E6) du nombre aléatoire crypté (RC) et de l'identificateur crypté (IC) en le deuxième identificateur (IA1) à transmettre au moyen serveur (MS ; SE), et la récupération dans le moyen serveur comprend l'application (E9) du nombre aléatoire crypté (RC) à l'algorithme asymétrique (AA) avec la clé privée (KPR) pour récupérer le nombre aléatoire généré (R), et l'application (E10) du nombre aléatoire récupéré (R) en tant que clé et de l'identificateur crypté (IC) à l'algorithme symétrique (AS) afin de récupérer le premier identificateur (ID).

4. Procédé conforme à la revendication 1 ou 2, selon lequel la détermination dans le moyen terminal (TU, CP ; PC, CA) comprend l'application (E25) du nombre aléatoire généré (R) et du premier identificateur (ID) concaténés à l'algorithme asymétrique (AA) avec la clé publique (KPU) pour produire le deuxième identificateur (IA2) à transmettre au moyen serveur (MS ; SE), et la récupération .dans le moyen serveur comprend l'application (E29) du deuxième identificateur (IA2) à l'algorithme asymétrique (AA) avec la clé privée (KPR) afin de récupérer le premier identificateur (ID).

5. Procédé conforme à l'une quelconque des revendications 1 à 4, comprenant un changement (E15 ; E35) de clé publique (KPU) et de clé privée (KPR) pour l'algorithme asymétrique (AA) dans le moyen serveur (MS ; SE) et un téléchargement (E15 ; E35) de la clé publique changée (KPU) depuis le moyen serveur dans le moyen terminal (TU, CP ; PC, CA).

6. Procédé conforme à l'une quelconque des revendications 1 à 5, selon lequel la génération de nombre aléatoire (E1) est périodique (E14 ; E34) dans le moyen terminal (TU, CP ; PC, CA).

7. Procédé conforme à l'une quelconque des revendications 1 à 6, selon lequel la génération de nombre aléatoire (E1) intervient (E14 ; E34) à la suite au moins de l'un des événements suivants dans le moyen terminal (TU, CP ; PC, CA) : mise sous tension du moyen terminal, établissement d'un appel, établissement d'une session entre le moyen terminal et le moyen serveur, substitution du moyen serveur à un autre moyen serveur, activation d'une application de service.

8. Moyen terminal d'usager (TU, CP ; PC, CA) s'identifiant ou identifiant un usager de celui-ci auprès d'un moyen serveur (MS ; SE) à travers un réseau de télécommunications (RR ; RT) à l'aide d'un premier identificateur (ID), ledit terminal d'usager comprenant :
- un algorithme asymétrique (AA), à clé publique (KPU),
- un moyen (GA) pour générer un nombre aléatoire (R), et
- un moyen (PR, M1) pour déterminer un deuxième identificateur (IA1 IA2) en fonction du nombre aléatoire, au moins d'une partie du premier identificateur (ID) et du résultat de l'exécution de l'algorithme asymétrique (AA) auquel au moins le nombre aléatoire est appliqué,
- un moyen pour transmettre le deuxième identificateur (IA1 ; IA2) au moyen serveur (MS ; SE) qui récupère le premier identificateur au moins par exécution de l'algorithme asymétrique (AA) auquel une clé privée (KPR) et au moins partiellement le deuxième identificateur (IA1 ; IA2) sont appliqués et qui vérifie que le premier identificateur récupéré (ID) soit écrit dans une mémoire (HLR) du moyen serveur,
le terminal d'usager étant **caractérisé en que** lesdits moyens pour déterminer et transmettre le deuxième identificateur sont adaptés pour conserver les valeurs du premier identificateur et du nombre aléatoire strictement confidentielles.

9. Moyen terminal d'usager conforme à la revendication 8, dans lequel le moyen pour générer un nombre aléatoire (GA) et le moyen pour déterminer un deuxième identificateur (PR, M1) sont inclus dans un objet électronique portable du type carte à puce (CP ; CA) .

## Claims

1. A method for identifying a user terminal means (TU, CP; PC, CA) or a user terminal means by a server means (MS; SE) through a telecommunications network (RR; RT) using a first identifier (ID), a public key (KPU) asymmetric algorithm (AA) being implemented in the terminal means, said method including:
- the generation (E1, E21) of a random number (R) in the user terminal means (TU, CP; PC, CA),
- the determination (E4, E5; E25) in the terminal means of a second identifier (IA1; IA2) as a function of the random number (R) at least of a part of the first identifier (ID) and of the result of the execution of the asymmetric algorithm (AA) to which at least the random number is applied,
- the transmission (E6; E26) of the second identifier (IA1; IA2) to the server means (MS; SE), and
- in the server means, the recovery (E9, E29) of the first identifier (ID) at least through the execution of the asymmetric algorithm (AA) which a private key (KPR) and at least partially the second identifier (IA1; IA2) are applied to, so that the server means checks that the first recovered identifier (ID) is written into a memory (HLR) of the server means,
said method being **characterised in that** the determination and the transmission of the second identifier (IA1; IA2) as well as the recovery of the first identifier are adapted so that the values of the first identifier and the random number (R) are kept strictly confidential by the user terminal means (TU, CP; PC, CA) and by the server means.

2. A method according to claim 1, wherein the steps mentioned in claim 1 come before at least one authentication (E13) of the terminal means (TU, CP; PC, CA) by the server means (MS; SE).

3. A method according to claim 1 or 2, wherein the determination in the terminal means (TU, CP; PC, CA) includes the application (E4) of the random number generated (R) at the public key (KPU) asymmetric algorithm (AA) to produce an encrypted random number (RC), an application (E5) of the generated random number (R) as the key and of the first identifier (ID) to a symmetric algorithm (AS) implemented in the terminal means to produce an encrypted identifier (IC), and a concatenation (E6) of the encrypted random number (RC) and the encrypted identifier (IC) into the second identifier (IA1) to be transmitted to the server means (MS; SE), and the recovery in the server means includes the application (E9) of the encrypted random number (RC) to the asymmetric algorithm (AA) with the private key (KPR) to recover the generated random number (R) and the application (E10) of the recovered random number (R) as a key and of the encrypted identifier (IC) to the symmetric algorithm (AS) in order to recover the first identifier (ID).

4. A method according to claim 1 or 2, according to which the determination in the terminal means (TU, CP; PC, CA) includes the application (E25) of the generated random number (R) and the first identifier (ID) concatenated to the asymmetric algorithm (AA) with the public key (KPU) to produce the second identifier (IA2) to be transmitted to the server means (MS; SE) and the recovery in the server means includes the application (E29) of the second identifier (IA2) to the asymmetric algorithm (AA) with the private key (KPR) in order to recover the first identifier (ID).

5. A method according to any one of claims 1 to 4, where including the change (E15; E35) of the public key (KPU) and the private key (KPR) for the asymmetric algorithm (AA) in the server means (MS; SE) and a downloading (E15; E35) of the changed public key (KPU) from the server means into the terminal means (TU, CP; PC, CA).

6. A method according to any one of claims 1 to 5, according to which the generation of a random number (E1) is periodical (E14; E34) in the terminal means (TU, CP; PC, CA).

7. A method according to any one of claims 1 to 6, according to which the generation of a random number (E1) occurs (E14; E34) following at least one of the following events in the terminal means (TU, CP; PC, CA): powering on of the terminal means, making of a call, opening of a session between the terminal means and the server means, substitution of the server means to another server means, activation of a service application.

8. A user terminal means (TU, CP; PC, CA) identifying itself or identifying a user thereof with a server means (MS; SE) through a telecommunication network (RR; RT) using a first identifier (ID), said user terminal including:
- a public key (KPU) asymmetric algorithm (AA),
- means (GA) for generating a random number (R), and
- means (PR, M1) for determining a second identifier (IA1; IA2) as a function of the random number, at least of a part of the first identifier (ID) and of the result of the execution of the asymmetric algorithm (AA) which at least the random number is applied to,
- a means for transmitting the second identifier (IA1; IA2) to the server means (MS; SE) which recovers the first identifier at least through the execution of the asymmetric algorithm (AA) which a private key (KPR) and at least partially a second identifier (IA1; IA2) are applied to, and which checks that the first recovered identifier (ID) is written into a memory (HLR) of the server means,
the user terminal being **characterised in that** said means for determining and transmitting the second identifier is adapted for keeping the values of the first identifier and the random number strictly confidential.

9. A user terminal means according to claim 8, wherein the means for generating a random number (GA) and the means for determining a second identifier (PR, M1) are included in a portable electronic device of the chip card type (CP; CA).

## Patentansprüche

1. Verfahren zur Identifizierung eines Terminalmittels eines Benutzers (TU, CP; PC, CA) oder eines Benutzers des Terminalmittels vermittels eines Servermittels (MS; SE) durch ein Telekommunikationsnetz (RR; RT) mit Hilfe einer ersten Kennung (ID), wobei ein asymmetrischer Algorithmus (AA) mit öffentlichem Schlüssel (KPU) im Terminalmittel implementiert ist, wobei das besagte Verfahren folgende Schritte umfaßt:
- Eine Generierung (E1, E21) einer beliebigen Zahl (R) im Terminalmittel eines Benutzers (TU, CP; PC, CA),
- Eine Bestimmung (E4, E5; E25) im Terminalmittel einer zweiten Kennung (IA1; IA2) in Abhängigkeit von der beliebigen Zahl (R), mindestens eines Teils der ersten Kennung (ID) und des Resultats der Ausführung des asymmetrischen Algorithmus (AA), auf den mindestens die beliebige Zahl angewendet wird,
- Eine Übertragung (E6; E26) der zweiten Kennung (IA1; IA2) an das Servermittel (MS; SE),
- Im Servermittel eine Wiedergewinnung (E9, E10; E29) der ersten Kennung (ID) zumindest durch Ausführung des asymmetrischen Algorithmus (AA), auf den ein privater Schlüssel (KPR) und mindestens teilweise die zweite Kennung (IA1; IA2) angewendet werden, damit das Servermittel verifiziert, daß die erste wiedergewonnene Kennung (ID) in einen Speicher (HLR) des Servermittels geschrieben wird,
wobei das besagte Verfahren **dadurch gekennzeichnet ist, daß** die Bestimmung und die Übertragung der zweiten Kennung (IA1; IA2) sowie die Wiedergewinnung der ersten Kennung geeignet sind, daß die Werte der ersten Kennung und der beliebigen Zahl (R) vom Terminalmittel eines Benutzers (TU, CP; PC, CA) und vom Servermittel streng vertraulich aufbewahrt werden.

2. Verfahren nach Anspruch 1, **dadurch gekennzeichnet, daß** die im Anspruch 1 angeführten Schritte mindestens einer Authentifizierung (E13) des Terminalmittels (TU, CP; PC, CA) durch das Servermittel (MS; SE) vorausgehen.

3. Verfahren nach Anspruch 1 oder 2, **dadurch gekennzeichnet, daß** die Bestimmung im Terminalmittel (TU, CP; PC, CA) eine Anwendung (E4) der generierten beliebigen Zahl (R) auf den asymmetrischen Algorithmus (AA) mit dem öffentlichen Schlüssel (KPU) umfaßt, um eine chiffrierte beliebige Zahl (RC) zu erzeugen, eine Anwendung (E5) der generierten beliebigen Zahl (R) als Schlüssel und der ersten Kennung (ID) auf einen im Terminalmittel implementieren symmetrischen Algorithmus (AS), um eine chiffrierte Bezeichnung (IC) zu erzeugen, und eine Kettung (E6) der chiffrierten beliebigen Zahl (RC) und der chiffrierten Bezeichnung (IC) in der zweiten Kennung (IA1), die an das Servermittel (MS; SE) übertragen werden muß, und die Wiedergewinnung im Servermittel umfaßt die Anwendung (E9) der chiffrierten beliebigen Zahl (RC) auf den asymmetrischen Algorithmus (AA) mit dem privaten Schlüssel (KPR), um die generierte beliebige Zahl (R) wiederzugewinnen, und die Anwendung (E10) der wiedergewonnenen beliebigen Zahl (R) als Schlüssel und der chiffrierten Kennung (IC) auf den symmetrischen Algorithmus (AS), um die erste Kennung (ID) wiederzugewinnen.

4. Verfahren nach Anspruch 1 oder 2, **dadurch gekennzeichnet, daß** die Bestimmung im Terminalmittel (TU, CP; PC, CA) die Anwendung (E25) der generierten beliebigen Zahl (R) und der ersten mit dem öffentlichen Schlüssel (KPU) mit dem asymmetrischen Algorithmus (AA) verkettete Kennung (ID) umfaßt, um die zweite Kennung (IA2) zu erzeugen, die an das Servermittel (MS; SE) übermittelt werden muß, und die Wiedergewinnung im Servermittel umfaßt die Anwendung (E29) der zweiten Kennung (IA2) auf den asymmetrischen Algorithmus (AA) mit dem privaten Schlüssel (KPR), um die erste Kennung (ID) wiederzugewinnen.

5. Verfahren nach einem beliebigen der vorstehenden Ansprüche 1 bis 4, **dadurch gekennzeichnet, daß** es eine Änderung (E15; E35) des öffentlichen Schlüssels (KPU) und des privaten Schlüssels (KPR) für den asymmetrischen Algorithmus (AA) im Servermittel (MS; SE) umfaßt und ein Herunterladen (E15; E35) des geänderten öffentlichen Schlüssels (KPU) ab dem Servermittel in das Terminalmmittel (TU, CP; PC, CA).

6. Verfahren nach einem beliebigen der vorstehenden Ansprüche 1 bis 5, **dadurch gekennzeichnet, daß** das Generieren einer beliebigen Zahl (E1) im Terminalmmittel (TU, CP; PC, CA) periodisch (E14; E34) ist.

7. Verfahren nach einem beliebigen der vorstehenden Ansprüche 1 bis 6, **dadurch gekennzeichnet, daß** das Generieren einer beliebigen Zahl (E1) nach mindestens einem der folgenden Ereignisse im Terminalmittel (TU, CP; PC, CA) eintritt (E14; E34): Einschalten des Terminalmittels, Erstellung eines Anrufs, Erstellung einer Sitzung zwischen dem Terminalmittel und dem Servermittel, Ersatz des Servermittels an die Stelle eines anderen Servermittels, Aktivierung einer Serviceanwendung.

8. Terminalmittel eines Benutzers (TU, CP; PC, CA) oder eines Benutzers, das sich selbst oder einen Benutzer davon bei einem Servermittel (MS; SE) durch ein Telekommunikationsnetz (RR; RT) mit Hilfe einer ersten Kennung (ID) identifiziert, wobei das besagte Benutzerterminal folgende Elemente umfaßt:
- Einen asymmetrischen Algorithmus (AA) mit öffentlichem Schlüssel (KPU),
- Ein Mittel (GA) zum Generieren einer beliebigen Zahl (R),
- Ein Mittel (PR, M1) zur Bestimmung einer zweiten Kennung (IA1; IA2) in Abhängigkeit von der beliebigen Zahl, mindestens eines Teils der ersten Kennung (ID) und des Resultats der Ausführung des asymmetrischen Algorithmus (AA), auf den mindestens die beliebige Zahl angewendet wird,
- Ein Mittel zum Übertragen der zweiten Kennung (IA1; IA2) an das Servermittel (MS; SE), das zumindest die erste Kennung durch Ausführung des asymmetrischen Algorithmus (AA) wiedergewinnt, auf den ein privater Schlüssel (KPR) und zumindest teilweise die zweite Kennung (IA1; IA2) angewendet werden, und der verifiziert, daß die erste wiedergewonnene Kennung (ID) in einen Speicher (HLR) des Servermittels geschrieben wird,
wobei das Benutzerterminal **dadurch gekennzeichnet ist, daß** die besagten Mittel zum Bestimmen und Übertragen der zweiten Kennung angepaßt sind, um die Werte der ersten Kennung und der beliebigen Zahl streng vertraulich aufzubewahren.

9. Terminalmittel des Benutzers nach Anspruch 8, **dadurch gekennzeichnet, daß** das Mittel zum Generieren einer beliebigen Zahl (GA) und das Mittel zum Bestimmen einer zweiten Kennung (PR, M1) in einem tragbaren elektronischen Objekt von der Art einer Chipkarte (CP; CA) eingeschlossen sind.
